# EUROPEAN PATENT APPLICATION

(11) **EP 4 265 523 A1**
(43) Date of publication of application: **25.10.2023**
(21) Application number: 21915163.6
(22) Date of filing: 22.12.2021
(51) Int. Cl.: B64D 27/24, B64G 1/14, H01M 50/213, H01M 50/249

(54) **BATTERY PACK AND BATTERY**

(30) Priority: 29.12.2020 JP 2020219893
(71) Applicant: Space Walker, Inc., Tokyo, 105-0004 (JP)
(72) Inventor: ISHIDA, Kenji, Tokyo 132-0025 (JP); YONEMOTO, Koichi, Tokyo 105-0004 (JP)
(74) Representative: Gille Hrabal Partnerschaftsgesellschaft mbB Patentanwälte
(86) International application number: PCT/JP2021/047519
(87) International publication number: WO 2022/145303

(57) **Abstract**

The present invention addresses the problem of improving space efficiency in placement in an aircraft. A front-side battery pack 30 is installed in a spacecraft 1 having a curved outer wall 11. The front-side battery pack 30 comprises a plurality of battery cells 31 disposed along an inner surface 11b of the outer wall 11, and cables 32 electrically and respectively connected to the plurality of battery cells 31. Each of the plurality of battery cells 31 has a first surface 31a facing the inner surface 11b of the outer wall 11, a second surface 31b on the side opposite from the first surface 31a, and side surfaces 31c connecting the first surface 31a and the second surface 31b, the battery cells 31 being disposed such that the side surfaces 31c of mutually adjacent battery cells 31 face each other. The cables 32 are arranged in gaps V formed between the side surfaces 31c of mutually adjacent battery cells 31.

## Description

### TECHNICAL FIELD

The present disclosure relates to battery packs and batteries.

### BACKGROUND ART

Devices such as aircraft may be equipped with a battery that supplies power to various on-board equipment. For example, Patent Document 1 discloses a space exploration device mainly having a rectangular parallelepiped housing as a device equipped with such a battery.

### PRIOR ART DOCUMENTS

### PATENT LITERATURE

Patent Document 1: JP 2010-132261 A

### SUMMARY OF THE INVENTION

### PROBLEMS TO BE SOLVED BY THE INVENTION

By the way, in the device as described above, for example, when a large piece of equipment is arranged near the center of the device, the battery may be arranged near the outer wall of the device. Meanwhile, an aircraft may have a curved outer wall due to, for example, the strength and air resistance requirements of the airframe. In such an aircraft, if the battery is placed near the curved outer wall, for example, unnecessary gaps tend to be generated between the battery component parts or between the component parts and the outer wall, resulting in poor space efficiency.

Therefore, the battery pack and the battery according to the present disclosure address improvement of space efficiency when arranged in an aircraft.

### MEANS FOR SOLVING THE PROBLEMS

A battery pack (30, 40) according to one aspect of the present disclosure is a battery pack (30, 40) to be mounted on an aircraft (1) with a curved outer wall (11), comprising : a plurality of battery cells (31, 41) arranged along an inner surface (11b) of the outer wall (11); cables (32, 42) electrically and respectively connected to the plurality of battery cells (31, 41), each of the plurality of battery cells (31, 41) having a first surface (31a, 41a) facing the inner surface (11b) of the outer wall (11), a second surface (31b, 41b) opposite to the first surface (31a, 41a), and side surfaces (31c, 41c) connecting the first surface (31a, 41a) and the second surface (31b, 41b), the battery cells being arranged so that the sides (31c, 41c) of mutually adjacent battery cells (31, 41) face each other, and each of the cables (32, 42) is arranged in a gap(V) formed between the side surfaces (31c, 41c) of the mutually adjacent battery cells (31, 41).

According to this battery pack (30, 40), a plurality of battery cells (31, 41) is arranged along the inner surface (11b) of the curved outer wall (11) of the aircraft (1), and cables (32, 42) are arranged in gaps (V) formed between the cells (31, 41). These gaps (V) are each formed between the side surfaces (31c, 41c) of the mutually adjacent battery cells (31, 41). Therefore, by utilizing the gaps (V) that occur when a plurality of battery cells (31, 41) is arranged along the inner surface (11b) of the outer wall (11) of the aircraft (1), the cables (32, 42) can be arranged, and it is possible to suppress sacrificing of new space for arranging the cables (32, 42). Therefore, the battery packs (30, 40) can improve space efficiency when arranged in the aircraft (1).

In the battery pack (30, 40) according to one aspect of the present disclosure, the outer wall (11) may be curved so as to be convex toward the outside of the aircraft (1), and the gap (V) may be formed between the respective side surfaces (31c, 41c) of the mutually adjacent battery cells (31, 41) and the inner surface (11b) of the outer wall (11). According to this construction, the cables (32, 42) are arranged in substantially triangular prism-shaped gaps (V) formed by the side surfaces (31c, 41c) and the inner surface 11b of the outer wall 11, the cables (32, 42) are easily fixed toward the inner surface (11b) of the outer wall (11) by the side surfaces (31c, 41c) of the battery packs (30, 40).

In the battery pack (30, 40) according to one aspect of the present disclosure, the side surfaces (31c, 41c) of the mutually adjacent battery cells (31, 41) may be separated from each other with a greater distance on the first surface (31a, 41a) side than the second surface (31b, 41b) side. According to this construction, the cables (32, 42) are arranged in substantially triangular prism-shaped gaps (V) formed by respective side surfaces (31c, 41c) of the mutually adjacent battery cells (31, 41), the cables (32, 42) are easily fixed toward the inner surface (11b) of the outer wall (11) by the side surfaces (31c, 41c) of the battery packs (30, 40).

In the battery pack (30, 40) according to one aspect of the present disclosure, the outer wall (11) may have a first curvature along a first direction (D1) along the outer wall (11) and a second curvature along a second direction (D2) perpendicular to the first direction (D1) and along the outer wall (11), that is larger than the first curvature, and the plurality of battery cells (31, 41) may be arranged such that their longitudinal directions (DL) are along the first direction (D1) and their lateral directions (DS) are along the second direction (D2). According to this construction, since the battery cells (31, 41) are arranged so that the lateral direction (DS) of the battery cells (31, 41) is oriented to the direction in which the curvature of the outer wall (11) is greater, it is possible to reduce gaps formed between the inner surface (11b) of the outer wall (11) and the first surfaces of the battery cells (31, 41).

In the battery pack (30, 40) according to one aspect of the present disclosure, the cables (32, 42) may be arranged in the gap (V) formed along the first direction (D1). According to this construction, since the cables (32, 42) are arranged along the direction in which the curvature of the outer wall (11) is smaller, it is possible to arrange the cables (32, 42) in a more linear state (that is, in a less bending state).

Battery packs (30, 40) according to one aspect of the present disclosure may be provided with a fuse box (34, 44) arranged along an inner surface (11b) of an outer wall (11) and electrically connected to cable (32, 42). According to this construction, in addition to the cables (32, 42), the fuse boxes (34, 44) are also arranged side by side with the battery cells (31, 41). Accordingly, the space efficiency when the battery packs (30, 40) are arranged in the aircraft (1) can be further improved.

A battery pack (30, 40) according to one aspect of the present disclosure may include a first insulating sheet (35, 45) covering the plurality of battery cells (31, 41) from the first surface (31a, 41a) side. This construction makes it possible to protect the battery cells (31, 41) electrically and mechanically. Also, by appropriately adjusting the heat insulating performance of the first insulating sheets (35, 45), it is possible to suitably adjust the degree of heating or cooling of the battery packs (30, 40) through the outer wall (11) of the aircraft (1).

A battery pack (30, 40) according to one aspect of the present disclosure may include a second insulating sheet (36, 46) covering the plurality of battery cells (31, 41) from the second surface (31b, 41b) side. This construction makes it possible to protect the battery cells (31, 41) electrically and mechanically. Further, by appropriately adjusting the heat insulation performance of the second insulating sheets (36, 46), it is possible to suitably adjust the degree of heating or cooling of the battery packs (30, 40) from inside the aircraft (1).

A battery pack (30, 40) according to one aspect of the present disclosure may include a battery case (37, 47) that houses the plurality of battery cells (31, 41) and fixed to an inner surface (11b) of an outer wall (11). This construction makes it possible to mechanically protect the battery cells (31, 41).

In the battery pack (30, 40) according to one aspect of the present disclosure, the battery case (37, 47) in a state of housing a plurality of the battery cells (31, 41), may be open on the first surface (31a, 41a) side and closed on the second surface (31b, 41b) side and the side surface (31c, 41c) sides of the battery cells (31, 41). This construction facilitates the work of housing the battery cells (31, 41) and the cables (32, 42) in the battery case (37, 47).

In the battery pack (30, 40) according to one aspect of the present disclosure, the battery case (37, 47) in a state of being fixed to the inner surface (11b) of the outer wall (11), may have water-proof property between the inside and outside of the battery case (37, 47), and air-permeability between the inside and outside of the battery case (37, 47). According to this construction, for example, water droplets condensed on the outside of the battery case (37, 47) are prevented from entering the inside of the battery case (37, 47), and it is possible to suppress occurrence of a pressure difference between the inside and the outside of the battery case (37, 47).

In the battery pack (30, 40) according to one aspect of the present disclosure, the battery case (37, 47) may constitute a part of the outer wall (11) of the aircraft (1) and may be fixed to an outer wall piece (11a) removable from a fuselage (10) of the aircraft (1). According to this construction, the battery packs (30, 40) can be removed from the aircraft (1) together with the outer wall piece (11a) in a state that the battery packs (30, 40) are attached to the inner surface (11b) of the outer wall (11) of the aircraft (1). This construction improves maintainability of the battery pack (30, 40). In particular, for example, it is possible to replace the battery packs (30, 40) together with the outer wall piece (11a) from outside the aircraft.

In the battery pack (30, 40) according to one aspect of the present disclosure, the outer wall piece (11a) may include an opening/closing mechanism (M) that allows communication between the inside and the outside of the aircraft (1), and the battery case (37, 47) may be fixed to the outer wall piece (11a) so as to avoid the opening/closing mechanism (M). According to this construction, when a predetermined mechanism (14) corresponding to the opening/closing mechanism (M) is arranged in the airframe of the aircraft (1), it is possible to access the predetermined mechanism (14) from the outside of the aircraft (1) simply by opening the opening/closing mechanism (M) without removing the outer wall piece (11a).

A battery (2) according to one aspect of the present disclosure includes a plurality of battery packs (30, 40) described above. According to this construction, since the battery (2) can be divided and arranged into a plurality of battery packs (30, 40), the degree of freedom in layout of the battery (2) is improved. Therefore, this battery (2) can improve the space efficiency when it is arranged in the aircraft (1).

In the battery (2) according to one aspect of the present disclosure, each of the plurality of battery packs (30, 40) may be provided on the inner surface (11b) of the outer wall (11) on the same side of the aircraft (1). The degree of heating or cooling of the battery packs (30, 40) through the outer walls (11), for example, tends to differ between the outer walls (11) other than those on the same side of the aircraft (1). However, according to the battery of this construction, since the plurality of battery packs (30, 40) are provided on the outer wall (11) on the same side of the aircraft (1), the degree of heating or cooling each of the plurality of battery packs (30, 40) can be equalized.

It should be noted that the above symbols in parentheses indicate the symbols of the components in the embodiment described later as examples of the present disclosure, and do not limit the present disclosure to the aspect of the embodiment.

### EFFECT OF THE INVENTION

Thus, the battery pack and battery according to the present disclosure can improve space efficiency when arranged in an aircraft.

### BRIEF DESCRIPTION OF THE DRAWINGS

FIG. 1 is a side view showing a spacecraft equipped with a battery according to the present embodiment.
FIG. 2 is a plan view showing a spacecraft.
FIG. 3 is a schematic cross-sectional view along a line III-III of the spacecraft.
FIG. 4 is a diagram showing an outer wall piece to which a battery is fixed.
FIG. 5 is a perspective view showing a battery cell.
FIG. 6 is a perspective view of a front-side battery pack as seen from the battery case side.
FIG. 7 is a side view of the front-side battery pack as seen from the connector side.
FIG. 8 is a perspective view of the front-side battery pack as seen from the opposite side of the battery case.
FIG. 9 is an exploded view of the front-side battery pack.
FIG. 10 is a perspective view of a rear-side battery pack as seen from the battery case side.
FIG. 11 is a side view of the rear-side battery pack as seen from the connector side.
FIG. 12 is a perspective view of the rear-side battery pack as seen from the side opposite to the battery case.
FIG. 13 is an exploded view of the rear -side battery pack.
FIG. 14 is a circuit diagram of a battery.
FIG. 15 is a schematic diagram showing a state in which a cable is arranged in a gap formed between side surfaces of mutually adjacent battery cells.

### MODE FOR CARRYING OUT THE INVENTION

Exemplary embodiments will be described below with reference to the drawings. The same or corresponding parts in each figure are denoted by the same reference numerals, and redundant explanations are omitted.

### [Configuration of spacecraft]

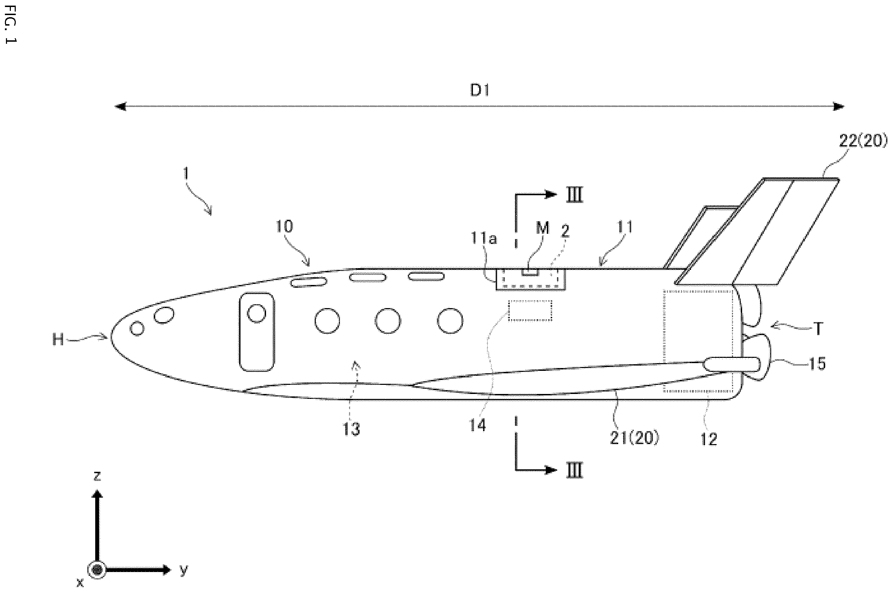

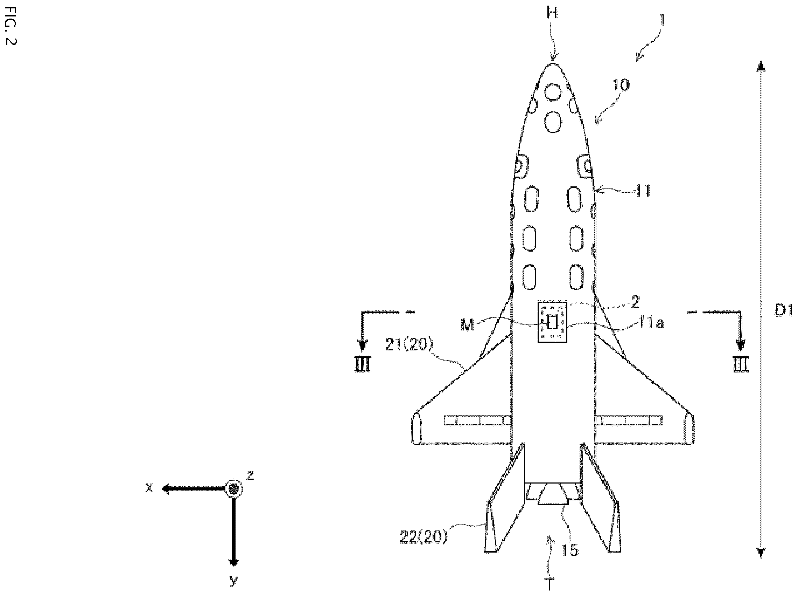

FIG. 1 is a side view showing a spacecraft 1 equipped with a battery 2 according to this embodiment. FIG. 2 is a plan view showing the spacecraft 1. A spacecraft (aircraft) 1 shown in FIGS. 1 and 2 is a winged aircraft capable of manned flight. It is, for example, a rocket (shuttle) that can fly upward to the space, fly through the space and return to the earth. In the following description, the spacecraft 1 is exemplified as an example of an aircraft equipped with the battery 2, but the aircraft is not limited to the spacecraft 1.

The spacecraft 1 is equipped with various devices that operate by electric power, and a battery 2 that supplies power to these devices. According to this battery 2, space efficiency when arranged in the spacecraft 1 can be improved. Here, "space efficiency" is an index indicating the extent to which a space of a predetermined volume can be effectively used. It may, for example, be an index indicating a volume of battery 2 arrangeable in a space of a given volume. A detailed configuration of the battery 2 will be described later. The spacecraft 1 has a fuselage 10 and fixed wings 20. In the following description, when the spacecraft 1 is placed horizontally, the direction from the left side to the right side as viewed from the front of the spacecraft 1 is the positive direction of the x-axis. The direction from the nose H side to the tail T side is defined as the y-axis positive direction, and the vertically upward direction is defined as the z-axis positive direction.

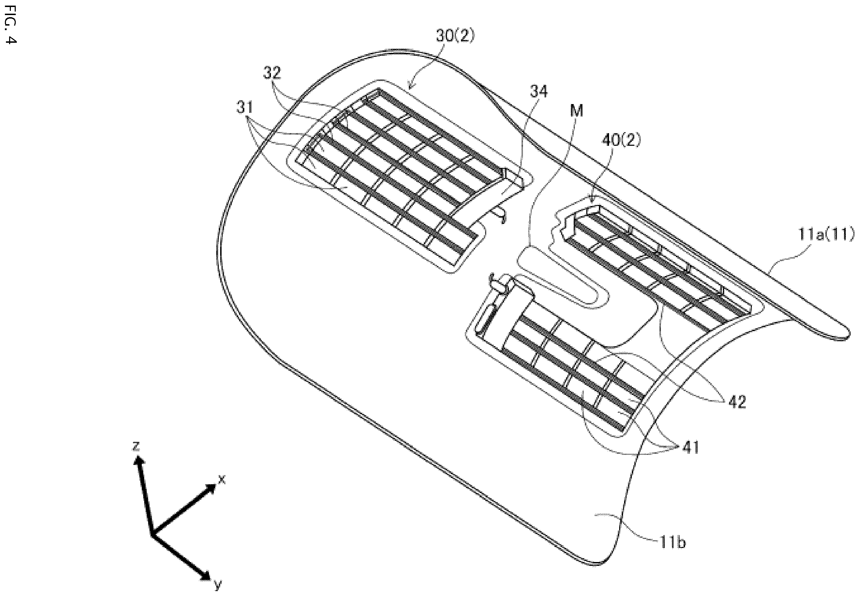

The fuselage 10 is a structure that constitutes the body part of the spacecraft 1. The fuselage 10 has a substantially cylindrical shape extending in the y-axis direction, and has a streamlined shape whose diameter is reduced in the negative direction of the y-axis (that is, toward the nose H). The fuselage 10 has an outer wall 11 forming its outer shell. Specifically, the spacecraft 1 comprises a curved outer wall 11. The outer wall 11 includes an outer wall piece 11a that constitutes a part of the outer wall 11 and is removable from the fuselage 10 of the spacecraft 1 (see FIG. 4).

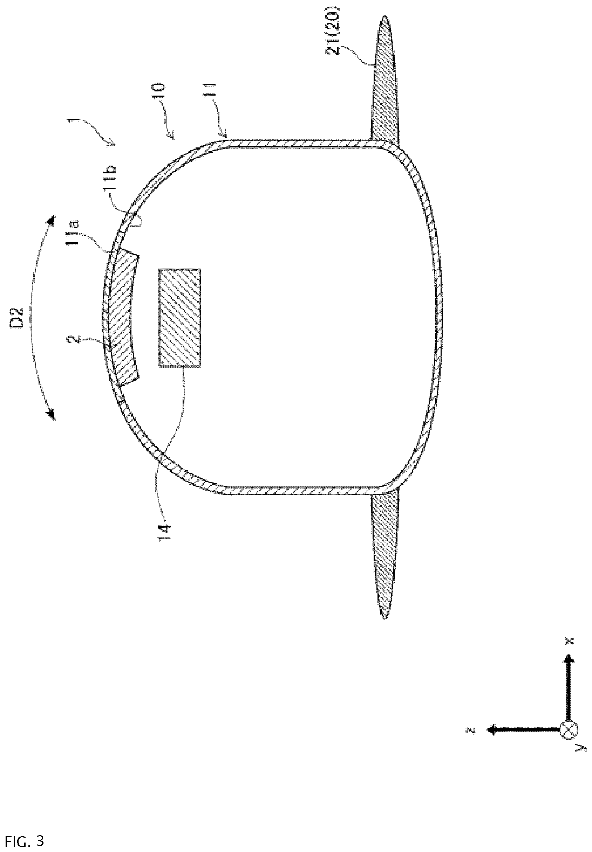

The outer wall 11 is curved so as to be convex toward the outside of the spacecraft 1. The outer wall 11, at least in the portion where the battery 2 is provided, has a first curvature along a first direction D1 along the outer wall 11 and a second curvature along a second direction D2 perpendicular to the first direction D1 and along the outer wall 11, that is configured to be larger than the first curvature (see FIG. 3). Here, the first direction D1 is the y-axis direction (more precisely, the direction along the line where the yz plane intersecting the battery 2 intersects the outer wall 11), and the second direction D2 is the x-axis direction (more strictly is the direction along the line where the zx plane intersecting the battery 2 intersects the outer wall 11). In other words, the outer wall 11 (particularly in a portion of the outer wall 11 to which the battery 2 is fixed, more specifically the portion of the outer wall piece 11a) is curved more strongly in the left-right direction (that is, in the x-axis direction) than the longitudinal direction (that is, the y-axis direction) of the spacecraft 1.

The outer wall piece 11a is provided on the upper surface side (that is, the z-axis positive direction side) of the fuselage 10 of the spacecraft 1 in the outer wall 11. The outer wall piece 11a has a substantially rectangular shape along the curved outer shape of the outer wall 11. The outer wall piece 11a is arranged so that its short direction is along the left-right direction of the spacecraft 1 (that is, the x-axis direction) and its longitudinal direction is along the front-rear direction of the spacecraft 1 (that is, the y-axis direction). Here, the outer wall piece 11a is removable to the outside of the fuselage 10, but it may be removable toward the inside of the fuselage 10 (or toward both the inside and outside of the fuselage 10).

The outer wall piece 11a includes an opening/closing mechanism M that allows communication between the inside and outside of the spacecraft 1. In the opening/closing mechanism M, a lid portion that is a part of the outer wall piece 11a (for example, a rectangular area in the approximate center of the outer wall piece 11a) may be opened and closed by a hinge. In this case, the hinge may be provided on the rear side of the lid (that is, on the positive y-axis side). Further, the opening/closing mechanism M may irreversibly transition from the closed state to the open state by dropping the lid. The outer wall piece 11a may be made of the same material as the portions of the outer wall 11 other than the outer wall piece 11a. Further, the opening/closing mechanism M may be made of the same material as the portions of the outer wall piece 11a other than the opening/closing mechanism M.

The fuselage 10 has a propulsion mechanism 12, a cabin 13, and a parachute deployment mechanism (predetermined mechanism) 14 in an internal space formed inside the outer wall 11. In addition to these, the fuselage 10 has various devices (not shown) such as various control devices, solid or liquid fuels, actuators, etc. in the internal space. In addition, the fuselage 10 has a nozzle 15 at the tail T.

The propulsion mechanism 12 is a mechanism that serves as a power source for the flight of the spacecraft 1, such as a rocket engine. In this case, the propulsion mechanism 12 accelerates a combusted fuel in the positive direction of the y-axis as a propellant. The nozzle 15 jets the propellant accelerated by the propulsion mechanism 12 in the positive y-axis direction. As a result, the spacecraft 1 obtains thrust in the negative direction of the y-axis (that is, in the traveling direction) due to the reaction of the jet propellant.

The cabin 13 is a space for crews of the spacecraft 1. Cabin 13 includes a cockpit for pilots operating spacecraft 1 and passenger seats for passengers of spacecraft 1. Further, the outer wall 11 facing the cabin 13 is provided with windows and doors.

The parachute deployment mechanism 14 is a mechanism that deploys a parachute for decelerating the spacecraft 1 when returning to the earth. The parachute deployment mechanism 14 is provided in the internal space of the fuselage 10 at a position corresponding to the outer wall piece 11a. In other words, the parachute deployment mechanism 14 is provided directly below the outer wall piece 11a (opening/closing mechanism M) and close to the outer wall piece 11a (opening/closing mechanism M). The parachute deployment mechanism 14 incorporates a folded parachute, and deploys the parachute upon receiving, for example, a parachute deployment command from a control device. At this time, for example, the lid of the opening/closing mechanism M provided on the outer wall piece 11a may be opened, and the parachute may be deployed outside the spacecraft 1 through the opening.

The fixed wing 20 has a main wing 21 and a tail 22. The main wing 21 is a wing portion of the spacecraft 1 and generates lift when the spacecraft 1 flies in the air. One main wing 21 is provided substantially horizontally on each of the left and right sides of the fuselage 10 (that is, both sides in the x-axis direction). The main wing 21 is configured as a so-called delta wing. Note that the main wing 21 is not limited to a delta wing, and may be a wing of various forms such as a tapered wing, a swept-back wing, and a swept-forward wing.

The tail 22 is a vertical tail provided on the tail T side of the spacecraft 1 and used to stabilize the airframe when the spacecraft 1 flies in the air. Two tail wings 22 are erected side by side toward the upper side of the fuselage 10. The tail 22 is provided on the tail T side (that is, the y-axis positive direction side) of the outer wall piece 11a.

### [Battery configuration]

FIG. 3 is a schematic cross-sectional view of the spacecraft 1 along a line III-III. FIG. 4 is a diagram showing the outer wall piece 11a to which the battery 2 is fixed, and shows the outer wall piece 11a viewed from the bottom side. The battery 2 shown in FIGS. 3 and 4 is a storage battery that supplies power to various devices that operate on power (for example, a rudder provided on the tail 22) in the spacecraft 1. The battery 2 includes a battery pack, which is a part (ie, assembly) in which a plurality of battery cells 31, 41 and cables 32, 42 are combined. Specifically, the battery 2 includes a plurality of battery packs, more specifically, two battery packs, a front-side battery pack (battery pack) 30 and a rear-side battery pack (battery pack) 40. In FIG. 4, illustration of battery cases 37, 47 and the like, which will be described later, is omitted.

The front-side battery pack 30 and the rear-side battery pack 40 are each provided on the inner surface 11b of the outer wall 11. Specifically, each of the front-side battery pack 30 and the rear-side battery pack 40 is provided on the inner surface 11b of the outer wall piece 11a of the outer wall 11. As a result, the front-side battery pack 30 and the rear-side battery pack 40 can be removed from the spacecraft 1 together with the outer wall piece 11a in a state that they are attached to the inner surface 11b of the outer wall 11 of the spacecraft 1. Here, the battery 2 is formed one size smaller than the outer wall piece 11a in plan view (that is, when viewed in the z-axis direction). In other words, the outer edge of the battery 2 is surrounded by the outer edge of the outer wall piece 11a in plan view.

The front-side battery pack 30 is provided closer to the nose H (that is, the y-axis negative direction side) than the rear-side battery pack 40. In other words, the rear-side battery pack 40 is provided closer to the tail T than the front-side battery pack 30 (that is, to the positive y-axis direction) on the inner surface 11b of the outer wall piece 11a. In this way, the front-side battery pack 30 and the rear-side battery pack 40 are arranged in the front-rear direction of the spacecraft 1 (that is, the y-axis direction) on the outer wall 11 on the same side of the spacecraft 1.

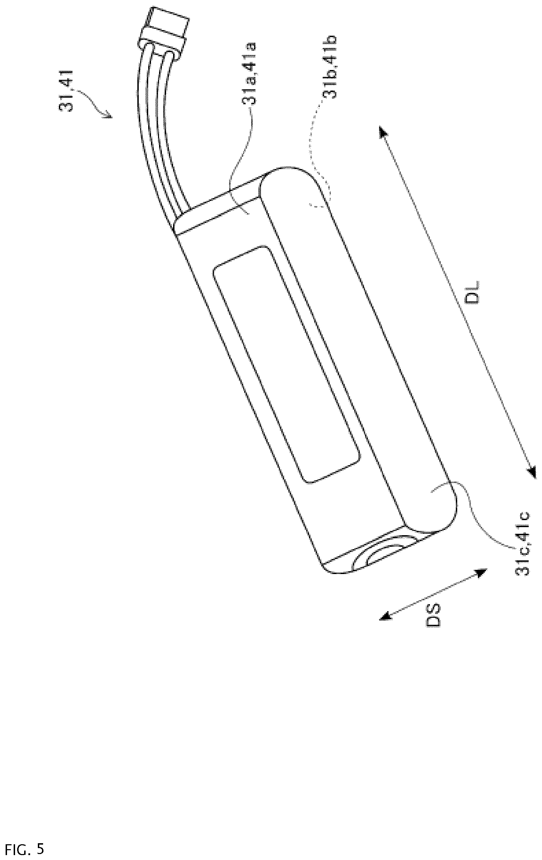

FIG. 5 is a perspective view showing battery cells 31 and 41. The battery cells 31 and 41 are chargeable/dischargeable storage batteries, and have, for example, resin housings. Each battery cell 31, 41 may be capable of outputting a voltage of approximately 4.2V or 4.35V, for example. The battery cells 31 and 41 (housings) have a substantially hexahedral (substantially rectangular parallelepiped) outer shape. The surfaces constituting the outer shape of the battery cells 31 and 41 are parallel or substantially parallel to each other (that is, back to back) and mutually connected surfaces (that is, mutually adjacent surfaces) are vertical or nearly vertical to each other.

Specifically, the battery cell 31 has a first surface 31a, a second surface 31b opposite to the first surface 31a, and side surfaces 31c connecting the first surface 31a and the second surface 31b. The first surface 31a and the second surface 31b are surfaces facing each other, and the side surfaces 31c are the remaining four surfaces of the hexahedron other than the first surface 31a and the second surface 31b. Each side surface 31c may extend in a direction perpendicular to each of the first surface 31a and the second surface 31b. The battery cell 31 is somewhat elongated and has a thin plate shape, and two large surfaces thereof are the first surface 31a and the second surface 31b. The external dimensions of the battery cell 31 may be, for example, approximately 110 mm × 30 mm × 20 mm. In a plane parallel to the first surface 31a and the second surface 31b, the direction in which the battery cells 31 extend is the longitudinal direction DL of the battery cells 31, and the direction perpendicular to the longitudinal direction DL is the lateral direction DS of the battery cells 31.

Similarly, the battery cell 41 has a first surface 41a, a second surface 41b opposite to the first surface 41a, and side surfaces 41c connecting the first surface 41a and the second surface 41b. The first surface 41a and the second surface 41b are surfaces facing each other, and the side surfaces 41c are the remaining four surfaces of the hexahedron other than the first surface 41a and the second surface 41b. Each side surface 41c may extend in a direction perpendicular to each of the first surface 41a and the second surface 41b. The battery cell 41 is somewhat elongated and has a thin plate shape, and two large surfaces thereof are the first surface 41a and the second surface 41b. The outer dimensions of the battery cell 41 may be, for example, approximately 110 mm × 30 mm × 20 mm. In a plane parallel to the first surface 41a and the second surface 41b, the direction in which the battery cells 41 extend is the longitudinal direction DL of the battery cells 41, and the direction perpendicular to the longitudinal direction DL is the lateral direction DS of the battery cells 41. Battery cell 41 may have the same configuration as battery cell 31.

### [Front-side battery pack]

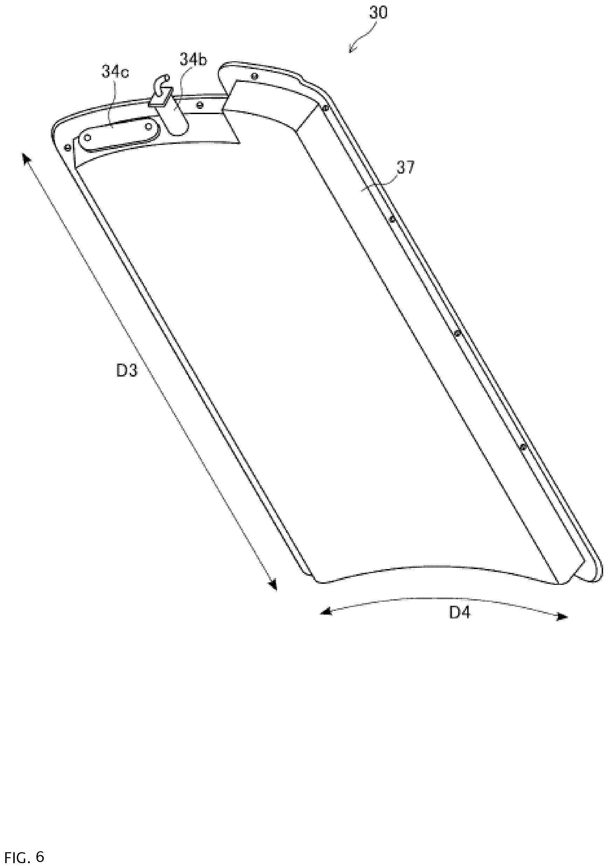

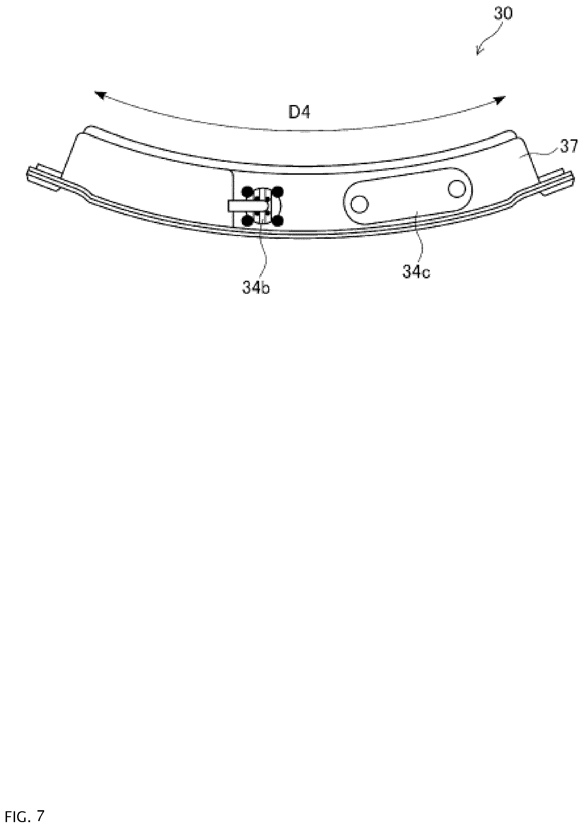

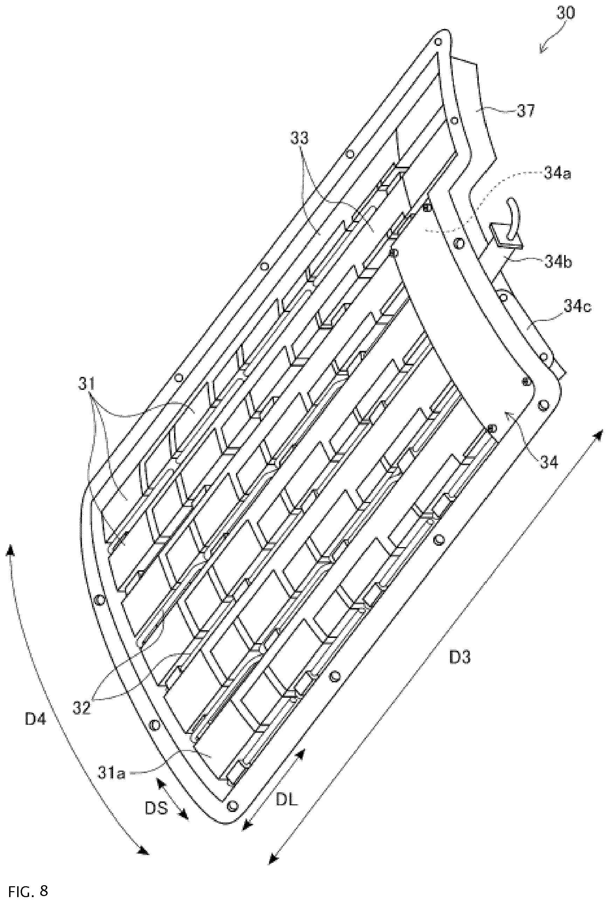

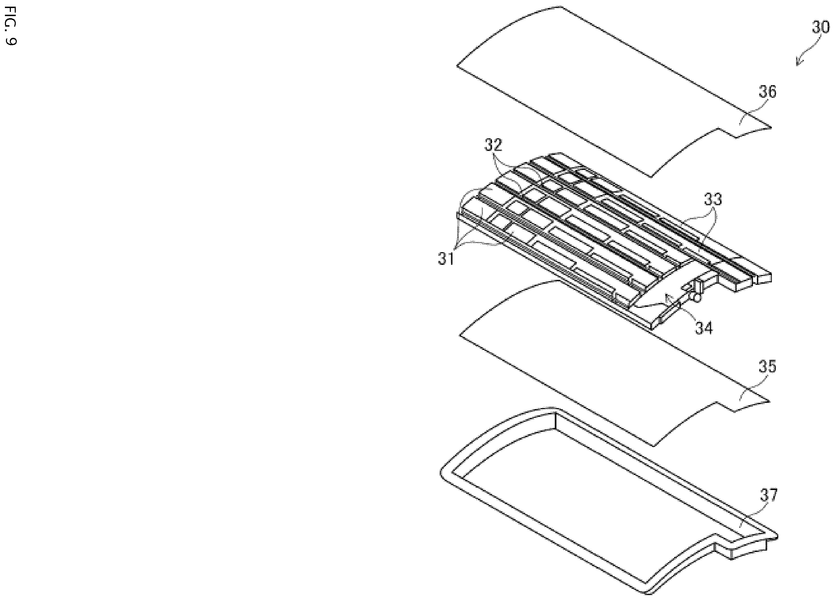

The configuration of the front-side battery pack 30 will be described. FIG. 6 is a perspective view of the front-side battery pack 30 viewed from the battery case 37 side. FIG. 7 is a side view of the front-side battery pack 30 viewed from the connector side. FIG. 8 is a perspective view of the front-side battery pack 30 viewed from the opposite side of the battery case 37. FIG. FIG. 9 is an exploded view of the front-side battery pack 30. The front-side battery pack 30 is an assembly of storage batteries in which a plurality of battery cells 31 and cables 32 are combined, and the front-side battery pack 30 alone can supply electric power. The front-side battery pack 30 is configured in a substantially rectangular thin plate shape. The front-side battery pack 30 includes battery cells 31, cables 32, busbars 33, a fuse box 34, a first insulating sheet 35, a second insulating sheet 36, and a battery case 37.

As described above, the battery cell 31 is a chargeable/dischargeable storage battery whose outer diameter is formed in a substantially hexahedral shape (simply referred to as a "hexahedron" but not strictly limited to a hexahedron). The front-side battery pack 30 includes a plurality of battery cells 31, and includes 26 battery cells 31 here. Each battery cell 31 is actually arranged along the inner surface 11b of the outer wall 11 (outer wall piece 11a). Specifically, each battery cell 31 is arranged such that its first surface 31a faces the inner surface 11b of the outer wall 11. The battery cells 31 are arranged such that the side surfaces 31c of mutually adjacent battery cells 31 face each other. The battery cells 31 are arranged in a state in which their longitudinal directions DL and the lateral directions DS are aligned with each other, and mutually adjacent battery cells 31 are spaced apart from each other. The battery cell 31 are arranged such that the longitudinal direction DL is along the first direction D1 of the outer wall 11 and the lateral direction DS is along the second direction D2 of the outer wall 11.

The cable 32 and the busbar 33 are electrically connected to each battery cell 31 and transmit the electric power charged and discharged from each battery cell 31 to the airframe side of the spacecraft 1. Each cable 32 and each bus bar 33 are made of metal containing copper or the like, and at least each cable 32 is flexible. Each cable 32 and each bus bar 33 are connected to charge/discharge connectors 34b and balance terminal connectors 34c provided on the outer circumference of the front-side battery pack 30. The fuse box 34 is a fuse 34a (and a housing that stores the fuse 34a) interposed between the battery cell 31 and the airframe side. The fuse box 34 is arranged along the inner surface 11b of the outer wall 11 and electrically connected to the cable 32.

The first insulating sheet 35 is a sheet for covering the battery cells 31 from the first surface 31a side and protecting the battery cells 31 electrically and mechanically. The first insulating sheet 35 suppresses current flow (leakage) between the battery cell 31 and surrounding structures (for example, the outer wall 11). In addition, the first insulating sheet 35 prevents the battery cells 31 from directly contacting surrounding structures and fills the gaps between them, thereby suppressing vibrations of the battery cells 31. The first insulating sheet 35 has substantially the same size and shape as the battery cell 31 in plan view (that is, when viewed in a direction perpendicular to the first surface 31a of the battery cell 31). That is, the first insulating sheet 35 entirely (or substantially entirely) covers the first surfaces 31a of the battery cells 31. For the first insulating sheet 35, one made of a material and having a thickness, etc. with suitable heat insulating performance can be selected according to conditions. In FIG.8, illustration of the first insulating sheet 35 and the like is omitted.

The second insulating sheet 36 is a sheet for covering the battery cell 31 from the second surface 31b side and protecting the battery cell 31 electrically and mechanically. The second insulating sheet 36 suppresses current (leakage) between the battery cell 31 and surrounding structures (for example, a battery case 37 to be described later). In addition, the second insulating sheet 36 prevents the battery cells 31 from directly contacting surrounding structures and fills the gaps between them, thereby suppressing vibrations of the battery cells 31. The second insulating sheet 36 has substantially the same size and shape as the battery cell 31 in plan view (that is, when viewed in a direction perpendicular to the second surface 31b of the battery cell 31). That is, the second insulating sheet 36 entirely (or substantially entirely) covers the second surfaces 31b of the battery cells 31. For the second insulating sheet 36, a one made of a material and having a thickness, etc. with suitable heat insulating performance can be selected according to conditions.

The battery case 37 is a case that houses a plurality of battery cells 31, cables 32, bus bars 33, a fuse box 34, a first insulating sheet 35, and a second insulating sheet 36, which are the contents of the front-side battery pack 30. The battery case 37 is formed in a wide and shallow box shape, and one side is open. That is, when the battery case 37 houses the plurality of battery cells 31, the first surface 31a side of each of the plurality of battery cells 31 is open, and the second surface 31b side and the side surface 31c sides are closed.

The battery case 37 has a curved shape. Specifically, the battery case 37 has a third curvature in a third direction D3, which meet the first curvature in the first direction D1 of the outer wall 11 when the battery case 37 is fixed to the inner surface 11b of the outer wall 11. Further, the battery case 37 has a fourth curvature in a fourth direction D4, which meet the second curvature in the second direction D2 of the outer wall 11 when the battery case 37 is fixed to the inner surface 11b of the outer wall 11.

A plurality of battery cells 31 are housed in the battery case 37 in a state that they are arranged side by side without overlapping. Specifically, in the battery case 37, the battery cells 31 are arranged side by side so that the first surface 31a of each battery cell 31 is exposed on the open surface side. The battery case 37 houses the battery cells 31 such that the longitudinal direction DL of each battery cell 31 is along the third direction D3 of the battery case 37 and the lateral direction DS of each battery cell 31 is along the fourth direction D4 of the battery case 37. The battery case 37 fixes the contents of the front-side battery pack 30 such as the battery cells 31 to the inner surface 11b of the outer wall 11. Specifically, the battery case 37 is fixed to the inner surface 11b of the outer wall 11 so that the opened surface side faces the inner surface 11b of the outer wall 11.

The battery case 37 is fixed to the inner surface 11b of the outer wall piece 11a (that is, the outer wall piece 11a that forms part of the outer wall 11 of the spacecraft 1 and is detachable from the fuselage 10 of the spacecraft 1) as described above. At this time, the battery case 37 is fixed to the outer wall piece 11a so as to avoid the opening/closing mechanism M. A parachute deployment mechanism 14 is provided directly below the opening/closing mechanism M of the outer wall piece 11a, and the battery case 37 is fixed to the outer wall piece 11a so as to avoid the parachute deployment mechanism 14 and the parachute deployed by the parachute deployment mechanism 14.

The battery case 37 has water-proof property between the inside and outside of the battery case 37 in a state of being fixed to the inner surface 11b of the outer wall 11. Specifically, the water-proof property may be realized by sandwiching a gasket or the like between the battery case 37 and the inner surface 11b of the outer wall 11, between the battery case 37 and the charge/discharge connector 34b, or between the battery case 37 and the balance terminal connector 34c. Alternatively, the water-proof property of the battery case 37 may be realized by imparting water-proof property to the charge/discharge connector 34b or the balance terminal connector 34c themselves.

The battery case 37 has air-permeability between the inside and outside of the battery case 37. For example, there may be such a small gap between the battery case 37 and the inner surface 11b of the outer wall 11 as to ensure water-proof property and air-permeability. Alternatively, the battery case 37 itself may be formed with a minute opening that can ensure water-proof property and air-permeability.

As shown in FIG. 9, the front-side battery pack 30 is assembled by housing from the open face side of the battery case 37, the second insulating sheet 36, housing a battery body constituted by the battery cells 31, the cables 32, the busbars 33, and the fuse box 34, that are connected together, and further housing the first insulating sheet 35. However, in the fuse box 34, only the fuse 34a may be housed in the battery case 37 first, and the charge/discharge connector 34b and balance terminal connector 34c may be connected to the outer periphery of the battery case 37 later. The first insulating sheet 35 and the second insulating sheet 36 may be attached to the battery body using double-sided tape, for example. Further, a rubber sheet for insulation may be further arranged between the battery case 37 and the second insulating sheet 36.

### [Rear-side battery pack]

The configuration of the rear-side battery pack 40 will be described. The configuration of the rear-side battery pack 40 is generally the same as the configuration of the front-side battery pack 30, and battery cells 41, cables 42, bus bars 43,a fuse box 44, a first insulating sheet 45, a second insulating sheet 46 and a battery case 47 of the rear-side battery pack correspond to the battery cells 31, the cables 32, the busbars 33, the fuse box 34, the first insulating sheet 35, the second insulating sheet 36, and the battery case 37 of the front-side battery pack 30, respectively. Further, a first surface 41a, a second surface 41b, and side surfaces 41c of the battery cell 41 in the rear-side battery pack 40, and a fuse 44a, a charge/discharge connector 44b, and a balance terminal connector 44c of the fuse box 44 correspond to the first surface 31a, the second surface 31b, and side surfaces 31c of the battery cell 31 in the front-side battery pack 30, and the fuse 34a, the charge/discharge connector 34b, and the balance terminal connector 34c of the fuse box 34, respectively. Therefore, regarding the configuration of the rear-side battery pack 40 that is common to the configuration of the front-side battery pack 30, the above description of the configuration of the front-side battery pack 30 can be read in accordance with the above correspondence. Differences between the configuration of the rear-side battery pack 40 and the configuration of the front-side battery pack 30 will be mainly described below.

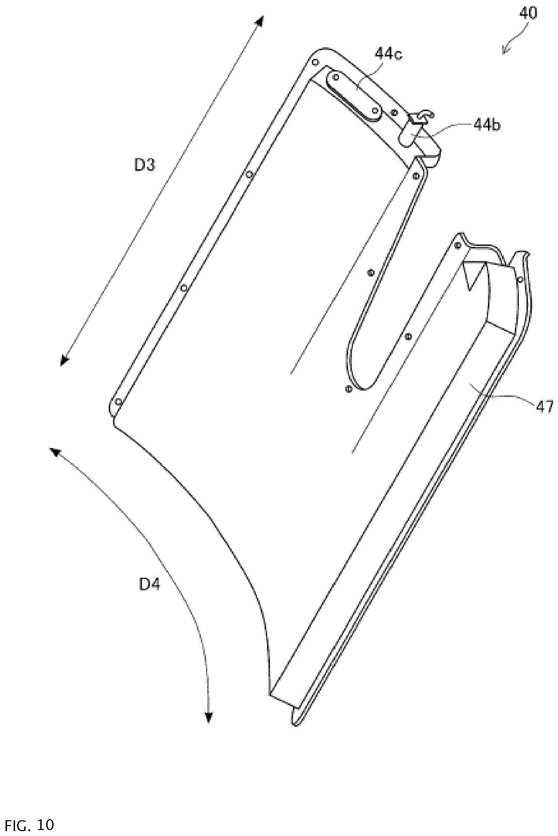

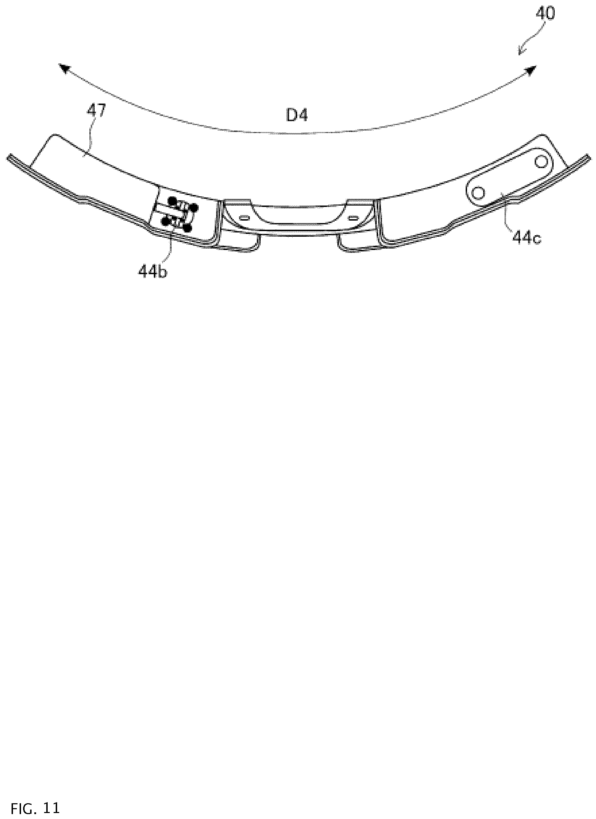

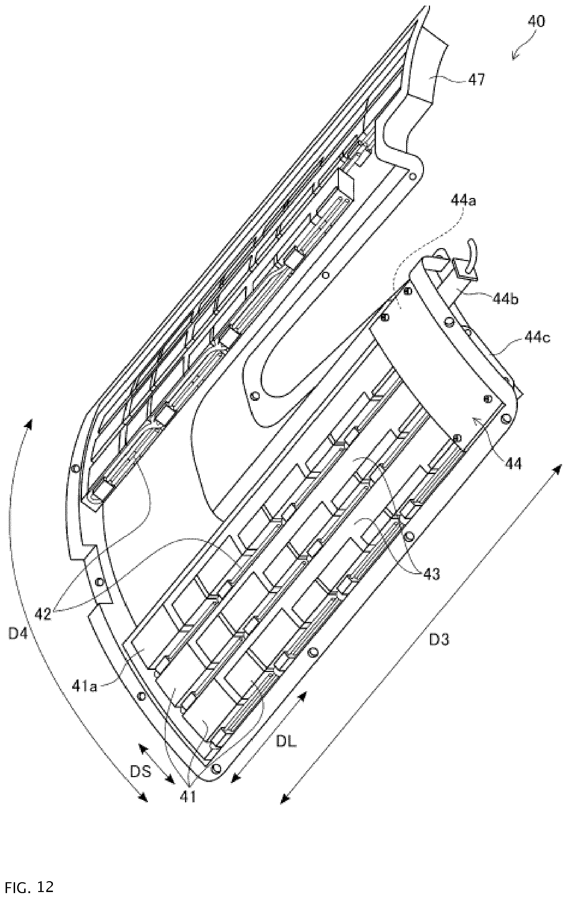

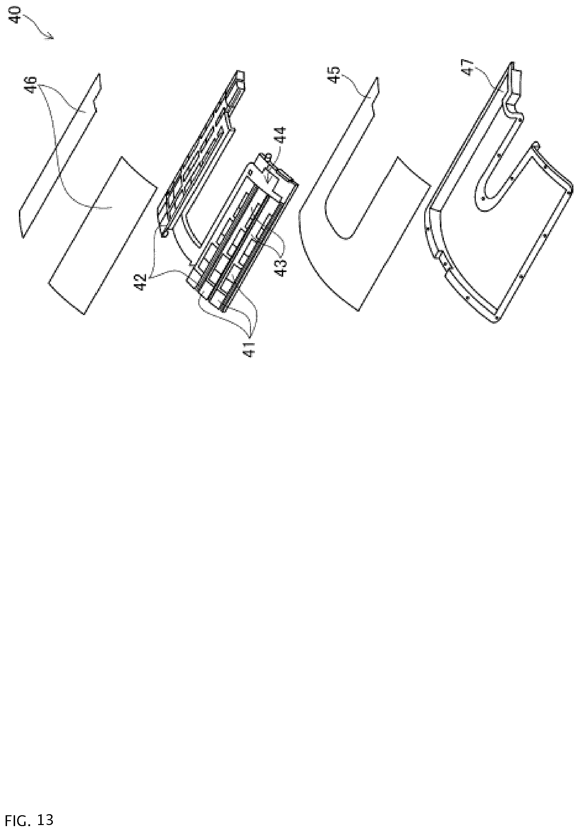

FIG. 10 is a perspective view of the rear-side battery pack 40 viewed from the battery case 47 side. FIG. 11 is a side view of the rear-side battery pack 40 viewed from the connector side. FIG. 12 is a perspective view of the rear-side battery pack 40 viewed from the opposite side of the battery case 47. FIG. 13 is an exploded view of the rear-side battery pack 40. In FIG. 12, illustration of the first insulating sheet 45 and the like is omitted. In the descriptions of FIGS. 10 to 13, the points common to the above-described descriptions of FIGS. 6 to 9 will be omitted.

The rear-side battery pack 40 includes a plurality of battery cells 41, and 24 battery cells 41 in this example. The battery cells 41 are actually arranged along the inner surface 11b of the outer wall 11 (outer wall piece 11a). Specifically, each battery cell 41 is arranged such that the first surface 41a faces the inner surface 11b of the outer wall 11. The battery cells 41 are arranged such that the side surfaces 41c of mutually adjacent battery cells 41 face each other. The battery cells 41 are arranged in a state in which the longitudinal directions DL and the lateral directions DS are aligned with each other, and mutually adjacent battery cells 41 are spaced apart from each other. The battery cells 41 are divided into two groups each including12 cells. These two groups are spaced apart from each other in the lateral direction of the spacecraft 1 (that is, in the x-axis direction). In a portion of the outer wall piece 11a between the arrangements of these two groups, an opening/closing mechanism M is provided.

Note that, as shown in FIG. 13, the rear-side battery pack 40 is assembled by housing from the open face side of the battery case 47, the second insulating sheet 46, housing a battery body constituted by the battery cells 41, the cables 42, the busbars 43, and the fuse box 44, that are connected together, and further housing the first insulating sheet 45. However, in the fuse box 44, only the fuse 44a may be housed in the battery case 47 first, and the charge/discharge connector 44b and balance terminal connector 44c may be connected to the outer periphery of the battery case 47 later. The first insulating sheet 45 and the second insulating sheet 46 may be attached to the battery body using double-sided tape, for example. Further, a rubber sheet for insulation may be further arranged between the battery case 47 and the second insulating sheet 46.

### [Circuit configuration]

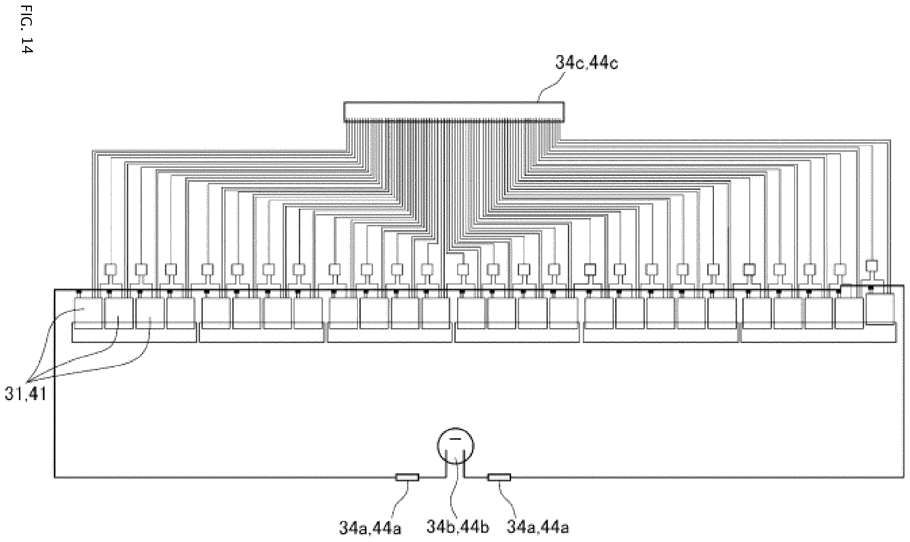

FIG. 14 is a circuit diagram of the battery 2. FIG. As shown in FIG. 14, the battery 2 includes a plurality of battery cells 31,41. Here, the battery 2 has a total of 77 cells including the battery cells 31 and the battery cells 41 (some of which are omitted in the drawing). The cells are connected in series to charge/discharge connectors 34b or 44b via a fuse 34a or 44a, and are connected in parallel to a balance terminal connector 34c. Note that the circuit configuration of the battery 2 is not limited to the one described above, and any configuration can be adopted.

### [Cable arrangement]

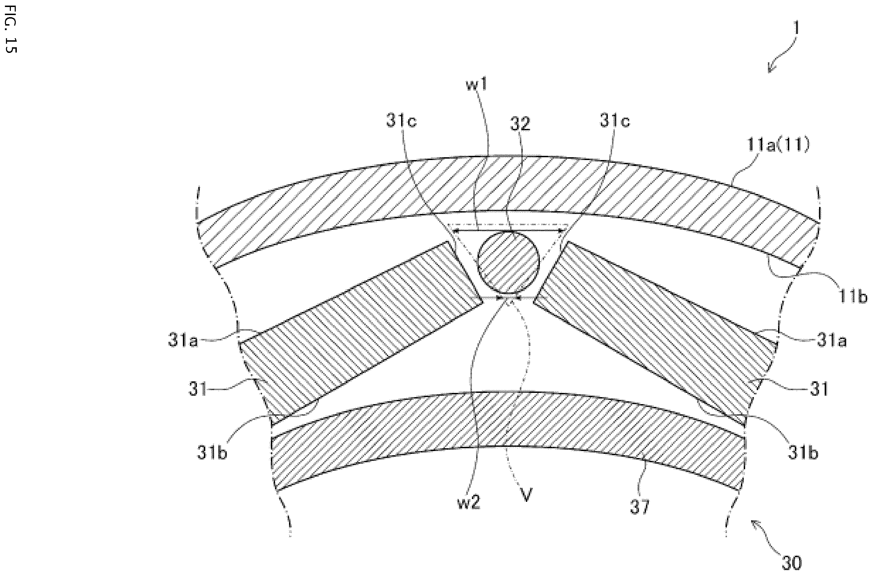

A mode of arrangement of the cables 32, 42 in the front-side battery pack 30 and the rear-side battery pack 40 will be described. Since the arrangement of the cables 42 in the rear-side battery pack 40 is the same as the arrangement of the cables 32 in the front-side battery pack 30, the front-side battery pack 30 will be described below as an example. FIG. 15 is a schematic diagram showing a state in which the cable 32 is arranged in the gap V formed between the side surfaces 31c of mutually adjacent battery cells 31. FIG.15 shows a state seen along the y-axis direction from the nose H side. In FIG. 15, some components such as the first insulating sheet 35 and the second insulating sheet 36 are omitted for convenience of explanation.

As shown in FIG. 15, the battery cells 31 are arranged along the inner surface 11b of the outer wall 11 (outer wall piece 11a) curved so as to be convex toward the outside of the spacecraft 1. Each battery cell 31 has a first surface 31a facing the inner surface 11b of the outer wall 11, and side surfaces 31c extending in a direction perpendicular to the first surface 31a. The battery cell 31 are arranged such that the side surfaces 31c of mutually adjacent battery cells 31 face each other. More specifically, the side surfaces 31c of mutually adjacent battery cells 31 are separated from each other with a greater distance on the first surface 31a side than the second surface 31b side opposite to the first surface 31a side. As a result, a substantially triangular prism-shaped (or substantially trapezoidal prism-shaped) gap V is formed between side surfaces 31c of mutually adjacent battery cells 31 and the inner surface 11b of the outer wall 11.

A cable 32 electrically connected to each battery cell 31 is arranged in the gap V along the direction in which the gap V extends. The gap V has such a shape that the width W1 (the distance between the side surfaces 31c of the battery cells 31) on the inner surface 11b side (outer wall side region) of the outer wall 11 is larger than the width W2 (the distance between the side surfaces 31c of the battery cells 31) on the side (airframe center side region) opposite to the inner surface 11b side of the outer wall 11. Therefore, the cable 32 is arranged at a position closer to the inner surface 11b side region (outer wall side region) at which is the gap V is wide.

The cable 32 may receive a biasing force toward the inner surface 11b of the outer wall 11 by the side surfaces 31c of the battery cells 31. In this case, the cable 32 is restrained from swinging. Further, the distance between the side surfaces 31c of the battery cells 31 on the second surface 31b side may be smaller than the thickness (cross-sectional area) of the cable 32. In this case, it is possible to prevent the cable 32 from protruding to the opposite side of the outer wall 11 from the gap V. Also, the distance between the first surface 31a side edges of side surfaces 31c of each battery cell 31 and the inner surface 11b of the outer wall 11 may be smaller than the thickness (cross-sectional area) of the cable 32. In this case, It is possible to prevent the cable 32 from protruding from the gap V into a gap between the first surface 31a and the outer wall 11.

### [Function and effect]

As described above, the front-side battery pack 30 and the rear-side battery pack 40 are the front-side battery pack 30 and the rear-side battery pack 40 to be mounted on the spacecraft 1 having a curved outer wall 11. They each includes a plurality of battery cells 31, 41 arranged along the inner surface 11b of the outer wall, and cables 32, 42 electrically and respectively connected to the plurality of battery cells 31, 41. Each of the plurality of battery cells 31, 41 has a first surface 31a, 41a facing the inner surface 11b of the outer wall 11, a second surface 31b, 41b opposite to the first surface 31a, 41a, and side surfaces 31c, 41c connecting the first surface 31a, 41a and the second surface 31b, 41b. The battery cells are arranged so that the side surfaces 31c, 41c of mutually adjacent battery cells 31, 41 face each other, and each cable 32, 42 is arranged in a gap V formed between the respective side surfaces 31c, 41c of the mutually adjacent battery cells.

According to the front-side battery pack 30 and the rear-side battery pack 40, a plurality of battery cells 31, 41 is arranged along the inner surface 11b of the curved outer wall 11 of the spacecraft 1, and cables 32, 42 are arranged in gaps V formed between the plurality of battery cells 31, 41. These gaps V are each formed between the side surfaces 31c, 41c of the mutually adjacent battery cells 31, 41. Therefore, the cables 32, 42 can be arranged by utilizing the gaps V that occur when a plurality of battery cells 31, 41 is arranged along the inner surface 11b of the outer wall 11 of the spacecraft 1, and it is possible to suppress sacrificing of new space for arranging the cables 32 and 42. Therefore, the front-side battery pack 30 and the rear-side battery pack 40 can improve the space efficiency when they are arranged in the spacecraft 1.

In the front-side battery pack 30 and the rear-side battery pack 40, the outer wall 11 is curved so as to be convex toward the outside of the spacecraft 1, and a gap V is formed between the mutually adjacent battery cells 31 and 41 and the inner surface 11b of the outer wall 11. According to this construction, the cables 32, 42 are arranged in the substantially triangular prism-shaped gaps V each formed by respective side surfaces 31c, 41c of the mutually adjacent battery cells 31, 41 and the inner surface 11b of the outer wall 11. Therefore, the cables 32, 42 can be easily fixed toward the inner surface 11b of the outer wall 11 by the side surfaces 31c, 41c of the front-side battery pack 30 and the rear-side battery pack 40, respectively.

In the front-side battery pack 30 and the rear-side battery pack 40, the side surfaces 31c, 41c of the mutually adjacent battery cells 31, 41 are separated from each other with a greater distance on the first surface 31a, 41a side than on the second surfaces 31b, 41b side. According to this construction, the cables 32, 42 are arranged in substantially triangular prism-shaped gaps V formed by respective side surfaces 31c, 41c of the mutually adjacent battery cells 31 and the inner surface 11b of the outer wall 11. Therefore, the cables 32 and 42 can be easily fixed toward the inner surface 11b of the outer wall 11 by the side surfaces 31c and 41c of the front-side battery pack 30 and the rear-side battery pack 40, respectively.

In the front-side battery pack 30 and the rear-side battery pack 40, the outer wall 11 has a first curvature along a first direction D1 along the outer wall 11 and a second curvature along a second direction D2 perpendicular to the first direction D1 and along the outer wall 11, that is larger than the first curvature, and the plurality of battery cells 31, 41 may be arranged such that their longitudinal directions DL are along the first direction D1 and their lateral directions DS are along the second direction D2. According to this construction, since the battery cells 31, 41 are arranged so that the lateral direction DS of the battery cells 31, 41 is oriented to the direction in which the curvature of the outer wall 11 is greater, it is possible to reduce gaps formed between the inner surface 11b of the outer wall 11 and the first surfaces of the battery cells 31, 41.

In the front-side battery pack 30 and the rear-side battery pack 40, the cables 32, 42 are arranged in the gap V formed along the first direction D1. According to this construction, since the cables 32 and 42 are arranged along the direction in which the curvature of the outer wall 11 is smaller, it is possible to arrange the cables 32 and 42 in a more linear state, that is, in a less bending state.

The front-side battery pack 30 and the rear-side battery pack 40 are provided with fuse boxes 34, 44 arranged along the inner surface 11b of the outer wall 11 and electrically connected to the cables 32, 42. According to this, in addition to the cables 32, 42, the fuse boxes 34, 44 are also arranged side by side with the battery cells 31, 41. Accordingly, the space efficiency when the front-side battery pack 30 and the rear-side battery pack 40 are arranged in the spacecraft 1 can be further improved.

The front-side battery pack 30 and the rear-side battery pack 40 are provided with first insulating sheets 35, 45 that cover the plurality of battery cells 31, 41 from the first surfaces 31a, 41a side. According to this construction, it becomes possible to protect the battery cells 31 and 41 electrically and mechanically. By appropriately adjusting the heat insulating performance of the first insulating sheets 35 and 45, it is possible to suitably adjust the degree of heating or cooling of the front-side battery pack 30 and the rear-side battery pack 40 through the outer wall 11 of the spacecraft 1.

The front-side battery pack 30 and the rear-side battery pack 40 are provided with second insulating sheets 36, 46 that cover the plurality of battery cells 31, 41 from the second surfaces 31b, 41b. According to this construction, it becomes possible to protect the battery cells 31 and 41 electrically and mechanically. Also, by appropriately adjusting the heat insulating performance of the second insulating sheets 36 and 46, it is possible to suitably adjust the degree of heating or cooling of the front-side battery pack 30 and the rear-side battery pack 40 through the inside of the spacecraft 1.

The front-side battery pack 30 and the rear-side battery pack 40 each includes a battery case 37, 47 housing a plurality of battery cells 31, 41 and fixed to the inner surface 11b of the outer wall 11. This construction makes it possible to mechanically protect the battery cells 31 and 41.

In the front-side battery pack 30 and the rear-side battery pack 40, the battery case 37, 47 in a state of housing a plurality of the battery cells 31, 41, may be open on the first surface 31a, 41a side and closed on the second surface 31b, 41b side and the side surface 31c, 41c sides of the battery cells 31, 41. This construction facilitates the work of housing the battery cells 31, 41 and the cables 32, 42 in the battery case 37, 47.

In the front-side battery pack 30 and the rear-side battery pack 40, the battery cases 37, 47 in a state of being fixed to the inner surface 11b of the outer wall 11, each has water-proof property between the inside and outside of the battery case 37, 47, and air-permeability between the inside and outside of the battery case 37, 47. According to this construction, for example, water droplets condensed on the outside of the battery case 37, 47 are prevented from entering the inside of the battery case 37, 47, and it is possible to suppress occurrence of a pressure difference between the inside and the outside of the battery case 37, 47.

In the front-side battery pack 30 and the rear-side battery pack 40, the battery cases 37 and 47 each constitutes a part of the outer wall 11 of the spacecraft 1 and is fixed to an outer wall piece 11a removable from a fuselage 10 of the spacecraft 1. According to this construction, the front-side battery pack 30 and the rear-side battery pack 40 can be removed from the spacecraft 1 together with the outer wall piece 11a in a state that the front-side battery pack 30 and the rear-side battery pack 40 are each attached to the inner surface 11b of the outer wall 11 of the spacecraft 1. This construction improves maintainability of the front-side battery pack 30 and the rear-side battery pack 40. In particular, for example, it is possible to replace each of the front-side battery pack 30 and the rear-side battery pack 40 together with the outer wall piece 11a from outside the spacecraft.

In the front-side battery pack 30 and the rear-side battery pack 40, the outer wall piece 11a includes an opening/closing mechanism M that allows communication between the inside and the outside of the spacecraft 1, and the battery case 37, 47 is fixed to the outer wall piece 11a so as to avoid the opening/closing mechanism M. According to this construction, when a parachute deployment mechanism 14 corresponding to the opening/closing mechanism M is arranged in the airframe of the spacecraft 1, it is possible to access the parachute deployment mechanism 14 from the outside of the spacecraft 1 simply by opening the opening/closing mechanism M without removing the outer wall piece 11a.

The battery 2 includes the plurality of front-side battery packs 30 and rear-side battery packs 40 described above. According to this construction, since the battery 2 can be divided and arranged into a plurality of front-side battery packs 30 and rear-side battery packs 40, the degree of freedom in layout of the battery 2 is improved. Therefore, this battery 2 can improve the space efficiency when it is arranged in the spacecraft 1.

In the battery 2, each of the plurality of front-side battery packs 30 and rear-side battery packs 40 is provided on the inner surface 11b of the outer wall 11 on the same side of the spacecraft 1. The degree of heating or cooling of the front-side battery pack 30 and the rear-side battery pack 40 through the outer walls 11, for example, tends to differ between the outer walls 11 other than those on the same side of the spacecraft 1. However, according to the battery of this construction, since the plurality of the front-side battery pack 30 and the rear-side battery pack 40 are provided on the outer wall 11 on the same side of the spacecraft 1, the degree of heating or cooling each of the plurality of the front-side battery pack 30 and the rear-side battery pack 40 can be equalized.

### [Modification]

The above-described embodiments can be implemented in various forms modified or improved based on the knowledge of those skilled in the art.

For example, in the above-described embodiments, the spacecraft 1 is exemplified as an aircraft on which the batteries 2 (the front-side battery pack 30 and the rear-side battery pack 40) are mounted. However, the aircraft is not limited to the spacecraft 1 that travels beyond the earth. For example, the aircraft may be a manned or unmanned airplane, or may be a device such as a drone or a radio-control aircraft.

Also, in the above-described embodiment, the battery 2 includes two battery packs (the front-side battery pack 30 and the rear-side battery pack 40). However, the battery 2 may comprise three or more battery packs, or may comprise only one battery pack.

In addition, in the above-described embodiments, the fuselage 10 has the parachute deployment mechanism 14 in the internal space formed inside the outer wall 11. However, the fuselage 10 may have another mechanism (predetermined mechanism) in place of the parachute deployment mechanism 14 or in addition to the parachute deployment mechanism 14.

Also, in the above-described embodiment, the battery 2 is provided on the outer wall piece 11a of the outer wall 11. However, the battery 2 may be provided in a non-removable portion of the outer wall 11 instead of the outer wall piece 11a. Similarly, the opening/closing mechanism M may be provided in a non-detachable portion of the outer wall 11 instead of the outer wall piece 11a.

Also, the circuit diagram of the battery 2 shown in the above-described embodiment is an example, and a circuit configuration different from this may be adopted.

## Claims

1. A battery pack to be mounted in an aircraft with a curved outer wall, comprising:
a plurality of battery cells arranged along an inner surface of the outer wall; and
cables electrically and respectively connected to the plurality of battery cells,
each of the plurality of battery cells having a first surface facing the inner surface of the outer wall, a second surface opposite to the first surface, and a side surface connecting the first surface and the second surface,
the battery cells being arranged so that the side surfaces of mutually adjacent battery cells face each other, and each of the cables is arranged in a gap formed between the side surfaces of the mutually adjacent battery cells.

2. The battery pack according to claim 1, wherein the outer wall is curved so as to be convex toward the outside of the aircraft, and the gap is formed between the respective side surfaces of the mutually adjacent battery cells and the inner surface of the outer wall.

3. The battery pack according to claim 1 or 2, wherein the side surfaces of the mutually adjacent battery cells are separated from each other with a greater distance on the first surface side than the second surface side

4. The battery pack according to any one of claims 1 to 3, wherein the outer wall has a first curvature along a first direction along the outer wall and a second curvature along a second direction perpendicular to the first direction and along the outer wall, that is larger than the first curvature, and the plurality of battery cells is arranged such that their longitudinal directions are along the first direction and their lateral directions are along the second direction.

5. The battery pack according to claim 4, wherein the cable is arranged in the gap formed along the first direction.

6. The battery pack according to any one of claims 1 to 5, comprising a fuse box arranged along the inner surface of the outer wall and electrically connected to the cable.

7. The battery pack according to any one of claims 1 to 6, comprising a first insulating sheet covering the plurality of battery cells from the first surface side.

8. The battery pack according to any one of claims 1 to 7, comprising a second insulating sheet covering the plurality of battery cells from the second surface side.

9. The battery pack according to any one of claims 1 to 8, comprising a battery case that houses a plurality of battery cells and is fixed to the inner surface of the outer wall.

10. The battery pack according to 9, wherein the battery case in a state of housing the plurality of the battery cells, is open on the first surface side and closed on the second surface side and the side surface sides of the battery cells.

11. The battery pack according to claim 9 or 10, wherein the battery case in a state of being fixed to the inner surface of the outer wall, has water-proof property between the inside and outside of the battery case and air-permeability between the inside and outside of the battery case.

12. The battery pack according to any one of claims 9 to 11, wherein the battery case constitutes a part of the outer wall of the aircraft and is fixed to an outer wall piece removable from a fuselage of the aircraft.

13. The battery pack according to claim 12, wherein the outer wall piece has an opening/closing mechanism that allows communication between the inside and the outside of the aircraft, and the battery case is fixed to the outer wall piece so as to avoid the opening/closing mechanism.

14. A battery comprising a plurality of battery packs as defined in any one of claims 1 to 13.

15. The battery according to claim 14, wherein each of the plurality of battery packs is provided on the inner surface of the outer wall on the same side of the aircraft.
